# EUROPEAN PATENT APPLICATION

(11) **EP 1 835 331 A1**
(43) Date of publication of application: **19.09.2007**
(21) Application number: 07004505.9
(22) Date of filing: 06.03.2007
(51) Int. Cl.: G02F 1/1333, G02F 1/1335

(54) **Color filter substrate and display apparatus comprising the same**

(30) Priority: 13.03.2006 KR 20060023203
(71) Applicant: Samsung Electronics Co., Ltd., Suwon-si 442-742 Gyeonggi-Do (KR)
(72) Inventor: Sohn, Ji-Won, Seoul (KR); Kang, Min, Gangnam-gu Seoul (KR)
(74) Representative: Dr. Weitzel & Partner

(57) **Abstract**

In a color filter substrate (105) and a display apparatus (403) having the same, a color filter layer (130) is formed on a base substrate (110) and a protective layer (140) including an inorganic material, such as silicon nitride or silicon oxide, is formed on the color filter layer (130) to protect the color filter layer from polluting agents, which can induce after images (or residual images). The protective layer prevents impurities from penetrating into the color filter layer, thereby improving the display quality of the display apparatus. The color filter substrate (105) can be advantageously employed in a patterned vertical alignment (PVA) LCD or in an in-plane switching (IPS) LCD.

## Description

### CROSS-REFERENCE TO RELATED APPLICATION

This application relies for priority upon Korean Patent Application No. 2006-23203 filed on March 13, 2006, the contents of which are herein incorporated by reference in its entirety.

### BACKGROUND OF THE INVENTION

### 1. Technical Field

The present invention relates to a color filter substrate and a display apparatus having the same, and more particularly, to a color filter substrate capable of improving a display quality and a display apparatus having the same.

### 2. Discussion of the Related Art

A liquid crystal display device can include a color filter substrate, an array substrate coupled with the color filter substrate and facing the color filter substrate and a liquid crystal layer interposed between the color filter substrate and the array substrate. The color filter substrate includes a base substrate and a color filter layer formed on the base substrate.

In order to widen the viewing angle of the liquid crystal display device, various types of liquid crystal display devices, such as PVA (patterned vertical alignment) mode, MVA (multi-domain vertical alignment) mode, and IPS (in-plane switching) mode liquid crystal display devices, have been developed.

In the case of the PVA mode liquid crystal display device, a patterned common electrode is formed on a color filter substrate. However, the color filter layer may be damaged by etchant(s) during the patterning process for the common electrode.

In the case of the IPS mode liquid crystal display device including a common electrode formed on an array substrate, a color filter layer directly makes contact with a liquid crystal layer or sealant. As a result, impurities can penetrate into the color filter layer, thereby creating an after image on a screen of the liquid crystal display device. Therefore, the display quality of the liquid crystal display device is degraded.

### SUMMARY OF THE INVENTION

Embodiments of the present invention provide a color filter substrate capable of improving a display quality by removing an after image, and a display apparatus having such a color filter substrate.

In an embodiment of the present invention, a color filter substrate includes a base substrate, a color filter layer formed on the base substrate, and a protective layer including an inorganic materials and being formed on the color filter layer to protect the color filter layer.

In an embodiment of the present invention, a display apparatus includes a color filter substrate and an array substrate coupled with the color filter substrate and facing the color filter substrate. The color filter substrate includes a first base substrate, a color filter layer formed on the base substrate, and a protective layer including an inorganic material and being formed on the color filter layer to protect the color filter layer. The array substrate includes a second base substrate and a pixel array formed on the second base substrate. The array substrate is coupled with the color filter substrate and faces the color filter substrate.

According to embodiments of the present invention, in the color filter substrate and the display apparatus having the same, the protective layer formed on the color filter layer prevents penetration of impurities into the color filter layer, thereby preventing an after image from being created on a screen of the display apparatus caused by contamination of the color filter layer.

### BRIEF DESCRIPTION OF THE DRAWINGS

Exemplary embodiments of the present invention can be understood in more detail from the following descriptions taken in conjunction with the accompanying drawings wherein:
FIG. 1 is a sectional view showing a color filter substrate according to an embodiment of the present invention;
FIG. 2 is a sectional view showing a display apparatus according to an embodiment of the present invention; and
FIG. 3 is a sectional view showing a display apparatus according to an embodiment of the present invention.

### DETAILED DESCRIPTION OF EMBODIMENTS

The invention is described more fully hereinafter with reference to the accompanying drawings, in which embodiments of the invention are shown. This invention may, however, be embodied in many different forms and should not be construed as limited to the embodiments set forth herein.

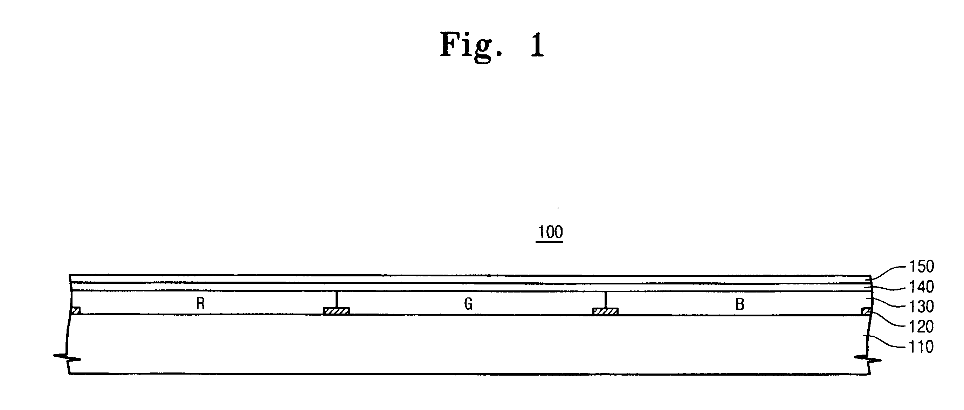

FIG. 1 is a sectional view showing a color filter substrate according to an embodiment of the present invention.

Referring to FIG. 1, the color filter substrate 100 includes a first base substrate 110, a black matrix 120, a color filter layer 130, a protective layer 140 and a common electrode 150.

The first base substrate 110 includes, for example, a transparent glass substrate. The black matrix 120 includes metallic materials, such as, for example, chrome (Cr) or chromium oxide (Cr₂O₃), or an organic substance containing carbon (C). The black matrix 120 is formed on the first base substrate 110.

The color filter layer 130 includes red (R), green (G) and blue (B) pixels and is provided adjacent to the black matrix 120. As shown in FIG. 1, the color filter layer 130 is partially overlapped with the black matrix 120.

The protective layer 140 is formed on the color filter layer 130. According to an exemplary embodiment of the present invention, the protective layer 140 includes inorganic materials, such as, for example, silicon nitride (SiNx) or silicon oxide (SiOx). The protective layer 140 prevents impurities from penetrating into the color filter layer 130, thereby preventing an after image from being created on a screen of the liquid crystal display device. According to an exemplary embodiment of the present invention, the protective layer 140 has a thickness of about 1 µm or less.

The common electrode 150 is uniformly formed on the protective layer 140. According to an exemplary embodiment of the present invention, the common electrode 150 includes transparent conductive materials, such as, for example, indium tin oxide (ITO) or indium zinc oxide (IZO).

The color filter substrate 100 may further include an overcoat layer (not shown) formed between the color filter layer 130 and the protective layer 140. The overcoat layer includes an organic material and planarizes the surface of the color filter substrate 100.

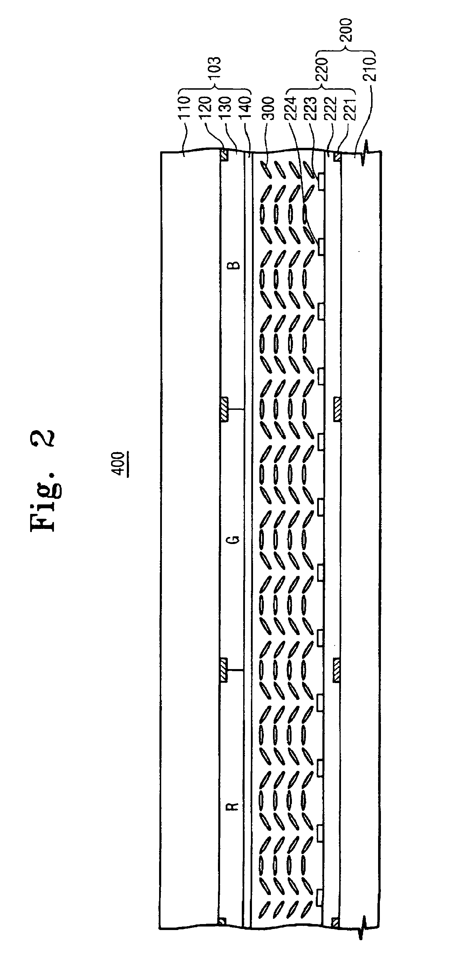

FIG. 2 is a sectional view showing a display apparatus according to an embodiment of the present invention. In FIG. 2, the same reference numerals denote the same or similar elements in FIG. 1.

Referring to FIG. 2, the display apparatus 400 includes a color filter substrate 103, an array substrate 200 coupled with the color filter substrate 103 and facing the color filter substrate 103, and a liquid crystal layer 300 interposed between the color filter substrate 103 and the array substrate 200.

The color filter substrate 103 includes a first base substrate 110, a black matrix 120, a color filter layer 130 and a protective layer 140.

The array substrate 200 includes a second base substrate 210 and a pixel array 220 formed on the second base substrate 210. The pixel array 220 includes switching devices 221, an insulating layer 222 covering the switching devices 221, pixel electrodes 223 formed on the insulating layer 222, and common electrodes 224 formed on the insulating layer 222. The common electrodes 224 are spaced apart from the pixel electrodes 223 by a predetermined distance.

The switching device 221 is located corresponding to an area where the black matrix 120 is formed. According to an exemplary embodiment of the present invention, the switching device 221 includes a thin film transistor. The insulating layer 222 includes inorganic materials, such as, for example, silicon nitride (SiNx) or silicon oxide (SiOx), or organic materials, such as, for example, acrylic resin. In addition, the insulating layer 222 can include a single inorganic insulating layer or multiple layers including an organic insulating layer formed on the inorganic insulating layer.

The pixel electrode 223 and the common electrode 224 include transparent conductive materials, such as, for example, ITO or IZO. The pixel electrode 223 is electrically connected to a drain electrode (not shown) of the switching device 221 so as to receive a data voltage from the switching device 221. The common electrode 224 is electrically insulated from the pixel electrode 223. A common voltage, which is different from the data voltage, is applied to the common electrode 224. Accordingly, a horizontal electric field is formed between the pixel electrode 223 and the common electrode 224.

The liquid crystal layer 300 includes a plurality of liquid crystal molecules. The liquid crystal molecules are horizontally aligned as the horizontal electric field formed between the pixel electrode 223 and the common electrode 224 is applied thereto. The display apparatus 400 adjusts transmittance of light by using the horizontally aligned liquid crystal molecules, thereby displaying the image.

The protective layer 140 formed on the color filter substrate 103 prevents impurities from penetrating into the color filter layer 130, thereby preventing an after image from being created on a screen of the display apparatus 400.

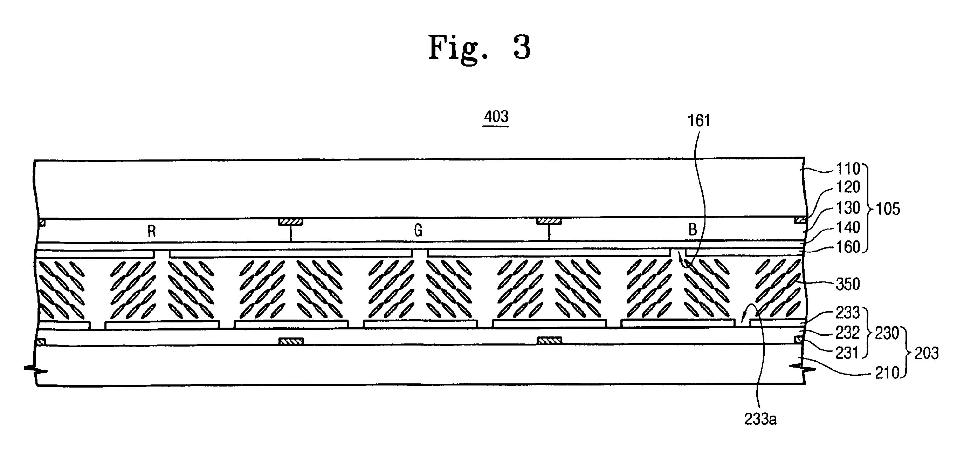

FIG. 3 is a sectional view showing a display apparatus according to an embodiment of the present invention. In FIG. 3, the same reference numerals denote the same or similar elements to those of FIG. 2.

Referring to FIG. 3, the display apparatus 403 includes a color filter substrate 105, an array substrate 203 coupled with the color filter substrate 105 and facing the color filter substrate 105, and a liquid crystal layer 350 interposed between the color filter substrate 105 and the array substrate 203.

The color filter substrate 105 includes a first base substrate 110, a black matrix 120, a color filter layer 130, a protective layer 140, and a common electrode 160.

The protective layer 140 includes an inorganic material and is formed on the color filter layer 130. The common electrode 160 is uniformly formed on the protective layer 140. The common electrode 160 has first openings 161 through which the protective layer 140 is partially exposed.

The array substrate 203 includes a second base substrate 210 and a pixel array 230 formed on the second base substrate 210. The pixel array 230 includes switching devices 231, an insulating layer 232 covering the switching devices 231, and a pixel electrode 233 formed on the insulating layer 232.

The pixel electrode 233 has second openings 233a through which the insulating layer 232 is partially exposed. As shown in FIG. 3, the second openings 233a face the common electrode 160 and the first openings 161 face the pixel electrode 233.

A data voltage is applied to the pixel electrode 233 and a common voltage, which is different from the data voltage, is applied to the common electrode 160. Accordingly, a vertical electric field is formed between the pixel electrode 233 and the common electrode 160, so that liquid crystal molecules interposed between the pixel electrode 233 and the common electrode 160 are vertically aligned as the vertical electric field is applied thereto.

In addition, a plurality of domains are provided between the array substrate 203 and the color filter substrate 105 in such a manner that the liquid crystal molecules can be aligned in different directions on the basis of the first and second openings 161 and 233a. Since the liquid crystal molecules can be aligned in different directions in the domains, the viewing angle of the display apparatus 403 can be widened.

The protective layer 140 formed on the color filter substrate 105 prevents impurities from penetrating into the color filter layer 130, thereby preventing an after image from being created on a screen of the display apparatus 403.

In addition, the protective layer 140 prevents the color filter layer 130 from being damaged by etchant(s) when the patterning process is performed in order to form the first openings 161 in the common electrode 160.

According to the color filter substrate and the display apparatus having the same of the embodiments of the present invention, the protective layer formed on the color filter layer prevents impurities from penetrating into the color filter layer.

As a result, the color filter layer can be prevented from being contaminated by impurities. In addition, the after image may not occur in the screen of the display apparatus, so that the display quality of the display apparatus can be improved.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A color filter substrate comprising:
a base substrate;
a color filter layer formed on the base substrate; and
a protective layer including an inorganic material formed on the color filter layer to protect the color filter layer.

2. The color filter substrate of claim 1, wherein the protective layer includes silicon nitride (SiNx) or silicon oxide (SiOx).

3. The color filter substrate of claim 1, wherein the protective layer has a thickness less than or equal to about 1 micrometer.

4. The color filter substrate of claim 1, further comprising a common electrode formed on the protective layer.

5. A display apparatus comprising:
a color filter substrate including a first base substrate, a color filter layer formed on the base substrate, and a protective layer including an inorganic material formed on the color filter layer; and
an array substrate including a second base substrate and a pixel array formed on the second base substrate, wherein the array substrate is coupled with the color filter substrate and faces the color filter substrate.

6. The display apparatus of claim 5, wherein the pixel array includes:
a switching device outputting a data voltage in response to a gate voltage;
a pixel electrode electrically connected to the switching device to receive the data voltage; and
a common electrode receiving a common voltage, wherein the common electrode is spaced apart from the pixel electrode by a predetermined distance.

7. The display apparatus of claim 5, wherein:
the color filter substrate further includes a common electrode formed on the protective layer, and part of the common electrode is removed to form an opening through which the protective layer is exposed; and
the pixel array includes a pixel electrode facing the common electrode, and part of the pixel electrode is removed corresponding to an area where the common electrode is formed.
